(19) Europäisches Patentamt
European Patent Office
Office européen des brevets

(11) Veröffentlichungsnummer: **0 035 141**
**A1**

(12) # EUROPÄISCHE PATENTANMELDUNG

(21) Anmeldenummer: **81100952.1**

(22) Anmeldetag **11.02.81**

(51) Int. Cl.³: **C 09 B 57/04**, C 08 K 5/34, C 09 D 11/02, C 09 D 3/00 // C07D403/04

(30) Priorität: **27.02.80 DE 3007329**

(43) Veröffentlichungstag der Anmeldung: **09.09.81**
**Patentblatt 81/36**

(84) Benannte Vertragsstaaten: **CH DE FR GB IT LI**

(71) Anmelder: **BASF Aktiengesellschaft,**
**Carl-Bosch-Strasse 38, D-6700 Ludwigshafen (DE)**

(72) Erfinder: **Lotsch, Wolfgang, Dr., Stettiner Strasse 32, D-6711 Beindersheim (DE)**
Erfinder: **Kemper, Reinhard, Dr., Viernheimer Weg 41, D-6900 Heidelberg (DE)**

(54) **Isoindolinfarbstoffe und deren Verwendung.**

(57) Isoindolinfarbstoffe der Formel

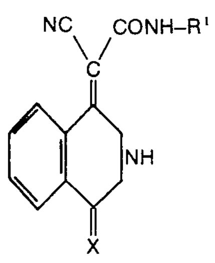

in der $R^1$ den Rest eines 5- oder 6gliedrigen heterocyclischen ungesättigten Ringes, der gegebenenfalls mit einem Benzring kondensiert ist, X einen Rest der Formel

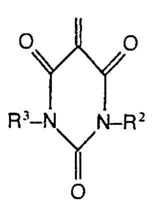

oder

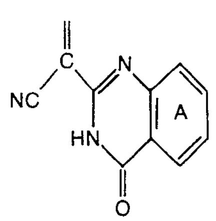

und

$R^2$ und $R^3$ unabhängig voneinander Wasserstoff, $C_1$- bis $C_4$-Alkyl, Benzyl, Phenyl oder 1-Naphthyl bedeuten und wobei $R^1$, die Phenyl- und Naphthylreste und der Ring A gegebenenfalls durch nicht löslich machende Gruppen substituiert sind und deren Verwendung zum Pigmentieren von Lacken, Druckfarben und Kunststoffen. Man erhält gelbe bis rote oder braune Färbungen mit hoher Farbstärke und guten Licht-, Wetter- und Überspritzechtheiten.

EP 0 035 141 A1

ACTORUM AG

Isoindolinfarbstoffe und deren Verwendung

Die Erfindung betrifft neue Isoindolinfarbstoffe und deren Verwendung.

Die neuen Farbstoffe haben die allgemeine Formel (I)

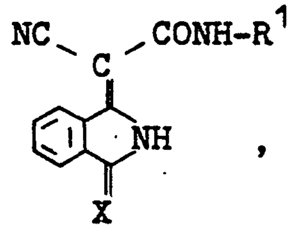
,

in der

$R^1$ den Rest eines 5- oder 6gliedrigen heterocyclischen ungesättigten Ringes, der gegebenenfalls mit einem Benzring kondensiert ist,

X einen Rest der Formel

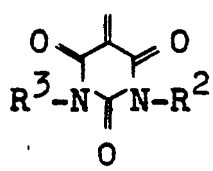
oder
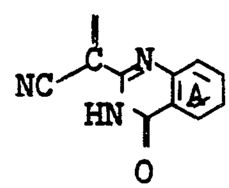
und

$R^2$ und $R^3$ unabhängig voneinander Wasserstoff, $C_1$- bis $C_4$-Alkyl, Benzyl, Phenyl oder 1-Naphthyl bedeuten und wobei $R^1$, die Phenyl- und Naphthylreste und der Ring A gegebenenfalls durch nicht löslich machende Gruppen substituiert sind.

Die neuen Isoindolinfarbstoffe (I) sind Pigmente mit guten coloristischen und anwendungstechnischen Eigenschaften. Sie geben in Lacken, Druckfarben und Kunst-

Noe/BL

stoffen gelbe bis rote oder braune Färbungen mit hoher Farbstärke und guten Licht-, Wetter- und Überspritzechtheiten.

Als 5- oder 6gliedrige ungesättigte heterocyclische Reste kommen für $R^1$ z. B. in Betracht:

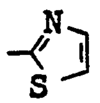 , 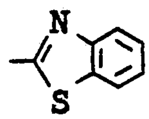 , 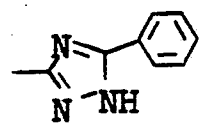 , 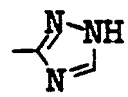 ,

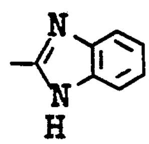 oder 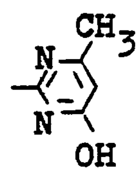 ,

von denen Thiazolyl-(2) und 1,2,4-Triazolyl-(3) bevorzugt sind.

Für $R^2$ und $R^3$ sind neben Wasserstoff z. B. im einzelnen zu nennen:
$C_1$- bis $C_4$-Alkyl: n-Butyl, sec.-Butyl, Isobutyl, Isopropyl, n-Propyl, Äthyl und Methyl sowie Phenyl, 1-Naphthyl und Benzyl, wobei die Naphthyl- und die Phenylgruppen gegebenenfalls noch durch nicht löslich machende Gruppen substituiert sind.

Unter nicht löslich machenden Gruppen (Substituenten) werden solche verstanden, die weder in Wasser noch in organischen Lösungsmitteln Löslichkeit des Farbstoffs bewirken. Solche Substituenten sind beispielsweise Halogen, Alkyl oder Alkoxy mit je 1 bis 6 C-Atomen, Nitro, Trifluormethyl, Carbamoyl, Ureido, Sulfamoyl oder Cyan; Alkoxycarbonyl, Alkanoyl, N-Alkylcarbamoyl, N-Alkylureido oder Alkanoylamino mit insgesamt je 2 bis 6 C-Atomen; Alkylsulfonyl oder Alkylsulfamoyl mit je 1 bis 6 C-Atomen; Aryloxycarbonyl, Aroyl, Aroylamino, Arylsulfonyl, N-Arylcarbamoyl, N-Arylsulfamoyl, Aryl, Aryloxy, N-Arylureido oder Arylazo oder ein ankondensierter 5 oder 6gliedriger Heteroring, der im Ring eine $-\underset{\underset{O}{\|}}{C}-NH-$Gruppierung enthält.

Als nicht löslich machende Substituenten sind Chlor, Brom, Methyl, Äthyl, Methoxy und/oder Äthoxy bevorzugt. Die Zahl der Substituenten ist 0, 1 oder 2, vorzugsweise 0 oder 1.

Aus coloristischen und anwendungstechnischen Gründen sind Farbstoffe der Formel (IV) bevorzugt

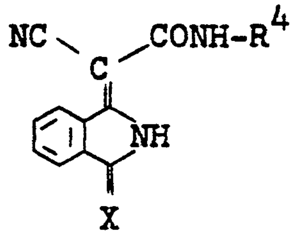 (IV),

in der

$R^4$ Thiazolyl-(2) oder 1,2,4-Triazolyl-(3) bedeutet und

X die oben angegebene Bedeutung hat.

Besonders bevorzugt sind Farbstoffe der Formel (IV), in der X für

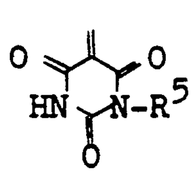 oder 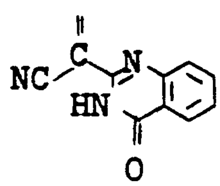

(IIa) (III a)

stehen, worin

$R^5$ Wasserstoff, Methyl oder Phenyl bedeutet.

Ganz besonders bevorzugt sind Verbindungen der Formel (V)

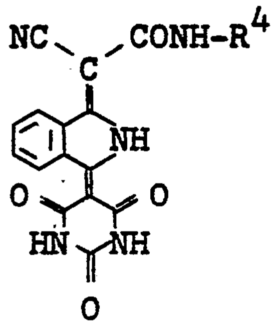

(V),

in der

$R^4$ die vorstehend angegebene Bedeutung hat.

Die erfindungsgemäßen Farbstoffe erhält man in an sich bekannter Weise, in dem ein Mol der Verbindung (VI)

$$NC-CH_2-CONH-R^1 \quad (VI)$$

mit 1,3-Diimino-isoindolin (VII) kondensiert und das Umsetzungsprodukt (Halbkondensationsprodukt) der Formel

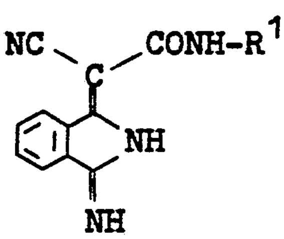

(VIII)

mit einem Mol der Verbindung

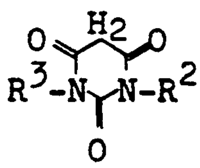 oder 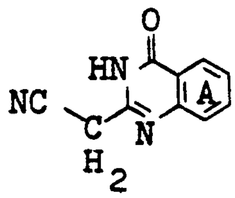

(X) (XI)

kondensiert, wobei $R^1$, $R^2$, $R^3$ und A die oben angegebene Bedeutung haben.

Die Kondensation des Diiminoisoindolins (VII) mit den Cyanmethylen-aktiven Verbindungen der Formel VI erfolgt vorzugsweise in Wasser oder in einem organischen Lösungs- oder Verdünnungsmittel, beispielsweise einem aliphatischen Alkohol mit 1 bis 4 C-Atomen, wie Methanol, Äthanol, Isopropanol, Butanol, ferner Glycolen oder Glycoläthern, offenkettigen oder cyclischen Amiden, wie Dimethylformamid, Dimethylacetamid oder N-Methylpyrrolidon oder in Mischungen der vorgenannten Lösungsmittel. Ein geringer Überschuß an Diiminoisoindolin kann vorteilhaft sein. Die Menge an Lösungs- und Verdünnungsmittel ist an sich unkritisch und wird bestimmt durch die Rührbarkeit bzw. Mischbarkeit des Reaktionsansatzes. Die Umsetzung erfolgt in der Regel bei Temperaturen unterhalb von 100 °C.

Die Kondensation der Halbkondensationsprodukte der Formel VIII mit den CH-aciden Verbindungen der Formel X und XI erfolgt in den vorstehend genannten Lösungsmitteln, vorzugsweise jedoch in aliphatischen Monocarbonsäuren wie Essigsäure oder Propionsäure bei Temperaturen zwischen 50 und 150 °C.

Sowohl die Halbkondensationsprodukte der Formel VII als auch die Pigmente der Formel I fallen in der Hitze aus und können durch Abfiltrieren und gegebenenfalls durch Waschen mit organischen Lösungsmitteln in reiner Form isoliert werden.

Durch geeignete Reaktionsführung gelingt es, auch beide Reaktionsschritte ohne Zwischenisolierung der Halbkondensationsprodukte der Formel VII im selben Reaktionsgefäß durchzuführen.

Die erhaltenen Rohprodukte können im allgemeinen als Pigmente verwendet werden. Sie können aber auch nach an sich bekannten Formierungsverfahren in für ihren vorgesehenen Verwendungszweck optimale Pigmentformen überführt werden.

Die folgenden Beispiele sollen die Erfindung zusätzlich erläutern. Die im folgenden angegebenen Teile und Prozentangaben beziehen sich auf das Gewicht.

Beispiel 1

56 Teile 1-(Cyan-1',2',4'-triazolyl-(3')-carbamoylmethylen)-3-iminoisoindolin und 28 Teile Barbitursäure werden in 1000 Teilen Eisessig 3 Stunden bei Rückflußtemperatur gerührt. Nach dem Abkühlen wird der Farbstoff abfiltriert, mit Eisessig und Methanol gewaschen und getrocknet.
Ausbeute: 74 Teile des Farbstoffs der Formel

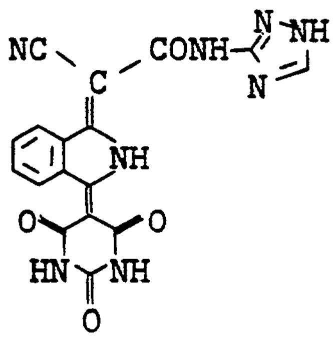

Der Farbstoff fällt in der Pigmentform an und kann direkt in Lacken, Druckfarben und Kunststoffen eingearbeitet werden.

Man erhält Färbungen in reinem gelbem Farbton, die sehr gute Licht- und Weichmacherechtheiten aufweisen.

Beispiele 2 bis 12

Man arbeitet wie in Beispiel 1, verwendet jedoch Halbkondensationsprodukte der Formel VIII und Barbitursäuren der Formel X.

Die Bedeutung von $R^1$, $R^2$ und $R^3$ ist in der folgenden Tabelle angegeben. Die mit den Farbstoffen erhaltenen Farbtöne sind in der rechten Spalte angegeben.

| Bsp. | $R^1$ | $R^2$ | $R^3$ | Farbton der Färbung |
|---|---|---|---|---|
| 2 | 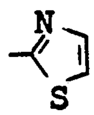 | -H | -H | braun |
| 3 | " | $-CH_3$ | -H | rotbraun |
| 4 | " | $-C_2H_5$ | -H | " |
| 5 | " | 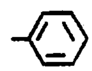 | -H | " |
| 6 | " | 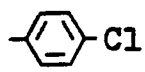 | -H | " |
| 7 | 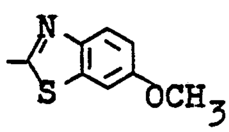 | -H | -H | braun |
| 8 | 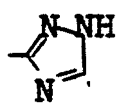 | 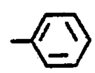 | -H | gelb |
| 9 | " | 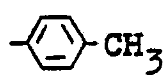 | -H | " |
| 10 | 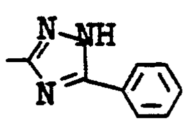 | H | -H | " |
| 11 | 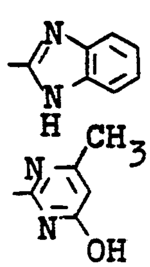 | H | -H | braun |
| 12 | | H | -H | gelb |

Beispiel 13

a) 19,5 Teile 1-(Cyan-1',2',4'-triazolyl-(2')-carbamoylmethylen)-3-iminoisoindolin und 14 Teile 2-Cyanmethylchinazolon-3 werden in 300 Teilen Eisessig 3 Stunden auf Rückflußtemperatur erwärmt. Nach dem Abkühlen wird der Farbstoff abfiltriert, mit Eisessig und Methanol gewaschen und getrocknet.
Ausbeute: 25 Teile des Farbstoffs der Formel

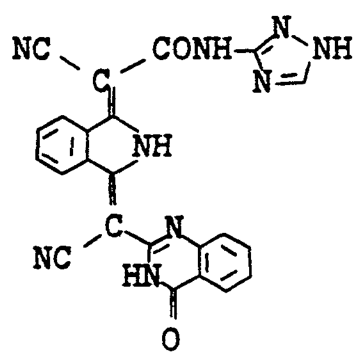

Der Farbstoff kann direkt als Pigment verwendet werden. Man erhält gelbstichig rote Färbungen, die gute Licht- und Überlackierechtheiten aufweisen.

b) Eine deckende und gleichzeitig auch in der Lichtechtheit etwas verbesserte Pigmentform wird erhalten, wenn man 10 Teile des Farbstoffes von a) in der 10-fachen Menge Dimethylformamid 2 Stunden bei 110 °C rührt, warm absaugt, mit Dimethylformamid und Methanol wäscht und trocknet.
Ausbeute: 9,5 Teile.

Beispiele 14 bis 20

Man arbeitet wie in Beispiel 13, verwendet jedoch Halbkondensationsprodukte der Formel VIII und Cyanmethylchinazolone der Formel XI. Die Bedeutung von $R^1$ und des Cyanmethylenchinazolonrestes ist in der folgenden Tabelle angegeben. Der Farbton der mit den Farbstoffen erhaltenen Färbungen ist in der rechten Spalte angegeben.

| Bsp. | $R^1$ | Cyanmethylen-chinazolonrest | Farbton der Färbung |
|---|---|---|---|
| 14 | 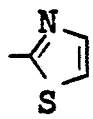 | 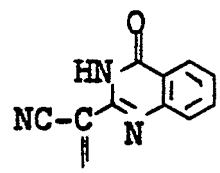 | rot |
| 15 | 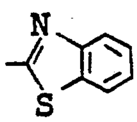 | " | " |
| 16 | 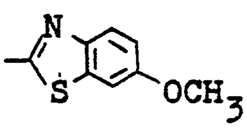 | " | rotbraun |
| 17 | 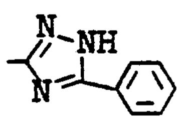 | " | rot |
| 18 | 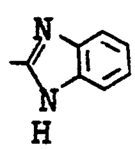 | " | braun |
| 19 | 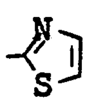 | 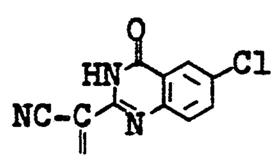 | rot |
| 20 | 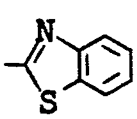 | 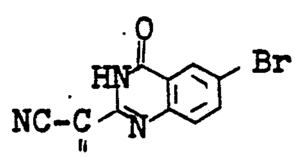 | " |

Beispiel 21
(Anwendung)

a) Lack

10 Teile des nach Beispiel 1 erhaltenen Farbstoffes und 95 Teile Einbrennlackmischung, die 70 % Kokosalkydharz (60 %ig in Xylol gelöst) und 30 % Melaminharz (ungefähr 55 %ig gelöst in Butanol/Xylol) enthält, werden in einem Attritor angerieben. Nach dem Auftragen und einer Einbrennzeit von 30 Minuten bei 120 °C werden gelbe Volltonlackierungen mit guter Licht- und Überspritzechtheit erhalten. Durch Zumischen von Titandioxyd werden gelbe Weißaufhellungen erhalten.

Verwendet man die in den Beispielen 2 bis 20 beschriebenen Farbstoffe, so werden Lackierungen in ähnlichen gelben bis roten Farbtönen und ähnlichen Eigenschaften erhalten.

b) Kunststoff

0,5 Teile des nach Beispiel 1 erhaltenen Farbstoffs werden auf 100 Teile Polystyrolgranulat (Standard-Marke) aufgetrommelt. Das angefärbte Granulat wird durch Extrudieren homogenisiert (190 bis 195 °C). Man erhält gelbe Extrudate, deren Färbung gute Lichtechtheit aufweist.

Verwendet man Mischungen aus 0,5 Teilen Farbstoff und 1 Teil Titandioxyd, so erhält man deckende, gelbe Färbungen.

Verwendet man die Pigmentfarbstoffe, die nach den Beispielen 2 bis 20 erhalten werden, so erhält man analoge Färbungen.

c) Druckfarbe

8 Teile des nach Beispiel 1 erhaltenen Pigmentfarbstoffes, 40 Teile eines mit Phenol/Formaldehyd modifizierten Kolophoniumharzes und 55 bis 65 Teile Toluol werden in einem Dispergieraggregat innig vermischt. Man erhält eine gelbe Toluol-Tiefdruckfarbe. Die mit dieser Farbe erhaltenen Drucke weisen gute Lichtechtheit auf.

Bei Verwendung der Farbstoffe aus den Beispielen 2 bis 20 werden ähnliche Ergebnisse erhalten.

## Patentansprüche

1. Isoindolinfarbstoffe der Formel

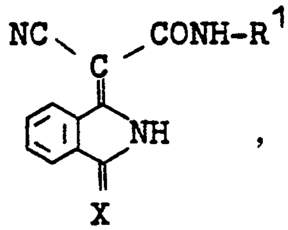
,

in der

$R^1$ den Rest eines 5- oder 6gliedrigen heterocyclischen ungesättigten Ringes, der gegebenenfalls mit einem Benzring kondensiert ist,

X einen Rest der Formel

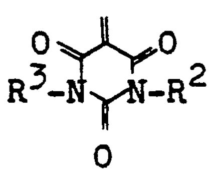 oder 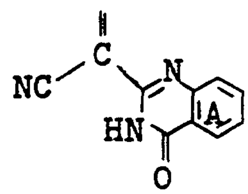 und

$R^2$ und $R^3$ unabhängig voneinander Wasserstoff, $C_1$- bis $C_4$-Alkyl, Benzyl, Phenyl oder 1-Naphthyl bedeuten und wobei $R^1$, die Phenyl- und Naphthylreste und der Ring A gegebenenfalls durch nicht löslich machende Gruppen substituiert sind.

2. Isoindolinfarbstoffe gemäß Anspruch 1, wobei in der Formel $R^1$ für einen Rest der Formel

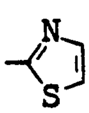 , 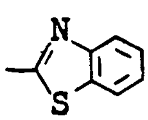 , 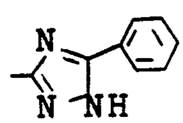 , 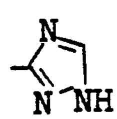 ,

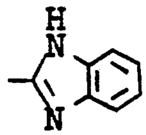 oder 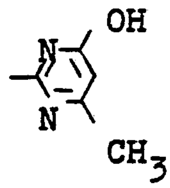 steht.

3. Isoindolinfarbstoffe gemäß Anspruch 1, gekennzeichnet durch die Formel

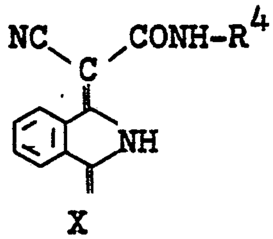 ,

in der

$R^4$ Thiazolyl-(2) oder 1,2,4-Triazolyl-(3) bedeuten und

X die im Anspruch 1 angegebene Bedeutung hat.

4. Isoindolinfarbstoffe gemäß Anspruch 3, dadurch gekennzeichnet, daß die Phenyl- und Naphthalinreste und der Ring A in X gegebenenfalls durch Chlor, Brom, Methyl, Äthyl, Methoxy und/oder Äthoxy als nicht löslich machende Gruppen substituiert sind.

5. Isoindolinfarbstoffe gemäß Anspruch 3, dadurch gekennzeichnet, daß X für einen Rest der Formel

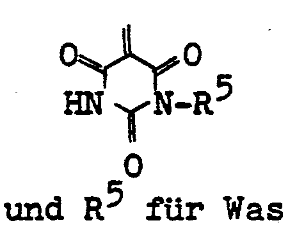 oder 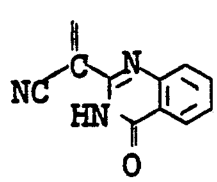

und $R^5$ für Wasserstoff, Methyl oder Phenyl stehen.

6. Isoindolinfarbstoffe gemäß Anspruch 3, dadurch gekennzeichnet, daß in der Formel X für einen Rest der Formel

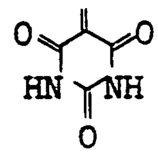

steht.

7. Verwendung der Isoindolinfarbstoffe gemäß Anspruch 1 zum Pigmentieren von Lacken, Druckfarben und Kunststoffen.

Europäisches Patentamt

# EUROPÄISCHER RECHERCHENBERICHT

Nummer der Anmeldung

0035141

EP 81 10 0952

| Kategorie | Kennzeichnung des Dokuments mit Angabe, soweit erforderlich, der maßgeblichen Teile | betrifft Anspruch |
|---|---|---|
| A | FR - A - 2 135 259 (BASF) & DE - A - 2 121 254 | |
| A | FR - A - 2 386 588 (CIBA-GEIGY) & DE - A - 2 814 526 | |
| A | GB - A - 1 187 667 (BAYER) & DE - A - 1 670 748 | |
| | ------ | |

KLASSIFIKATION DER ANMELDUNG (Int. Cl.)

C 09 B 57/04
C 08 K 5/34
C 09 D 11/02
C 09 D 3/00//
C 07 D 403/04

RECHERCHIERTE SACHGEBIETE (Int. Cl.3)

C 09 B 57/04

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

✓ Der vorliegende Recherchenbericht wurde für alle Patentansprüche erstellt.

| Recherchenort | Abschlußdatum der Recherche | Prüfer |
|---|---|---|
| Den Haag | 11.06.1981 | DAUKSCH |